# FASCICULE DE BREVET EUROPEEN

(11) **EP 4 007 695 B1**
(45) Date de publication et mention de la délivrance du brevet: **13.11.2024**
(21) Numéro de dépôt: 20728801.0
(22) Date de dépôt: 03.06.2020
(51) Int. Cl.: B32B 3/02, B32B 17/10

(54) **VITRAGE FEUILLETE COULISSANT A DEBORD INTERIEUR LATERAL**
SCHIEBEVERBUNDGLASSCHEIBE MIT INTERNEM SEITENÜBERHANG
SLIDING LAMINATED GLAZING WITH INTERNAL SIDE OVERHANG

(30) Priorité: 05.06.2019 FR 1905947
(43) Date de publication de la demande: 08.06.2022
(73) Titulaire: SAINT-GOBAIN GLASS FRANCE, 92400 Courbevoie (FR)
(72) Inventeur: WESSBERG, Henrik, 29187 BALLINGSLOV (SE); RAPENNE, Thibault, 60400 NOYON (FR)
(74) Mandataire: Saint-Gobain Recherche
(86) Numéro de dépôt international: PCT/EP2020/065338
(87) Numéro de publication internationale: WO 2020/245192

(56) Documents cités:
- EP-A1- 0 600 766
- WO-A1-2018/078281
- FR-A1- 2 525 677

## Description

La présente invention se rapporte à un vitrage de véhicule, et notamment de véhicule automobile, comportant une vitre ainsi que des moyens pour permettre la mobilité de ladite vitre en translation par rapport à une porte dudit véhicule, ladite vitre étant bombée et feuilletée et comprenant au moins une feuille de verre extérieure, une feuille de verre intérieure, ainsi qu'une feuille de matière adhésive située entre ladite feuille de verre extérieure et ladite feuille de verre intérieure, chaque feuille présentant un chant périphérique.

L'art antérieur connaît de la demande de brevet EP 908 302 un vitrage feuilleté dont une vitre intérieure présente un bord qui s'étend au-delà du bord de la vitre extérieure, cette vitre intérieure étant trempée thermiquement ; toutefois, dans ce document, le vitrage n'est pas un vitrage mobile mais un vitrage fixe et la trempe thermique a pour but de faciliter la rupture entière du vitrage afin de permettre une évacuation par la baie, ce qui est très éloigné du contexte des vitrages mobiles puisque pour permettre une évacuation par la baie d'un vitrage mobile, il suffit de le déplacer.

L'art antérieur connaît de la demande internationale de brevet N° WO 2014/029605 un vitrage mobile feuilleté dont la feuille de verre intérieure est fine et peut être trempée chimiquement. Ce document indique aussi la présence d'un débord mais ce dernier est appliqué au verre extérieur, épais, qui est nécessairement trempé et bombé. Ce document insiste sur le fait que la feuille de verre fin ne participe pas activement (mais seulement passivement) au galbe et à l'apparence générale du vitrage.

L'art antérieur connaît par ailleurs de la demande de brevet internationale WO 2018/078280, un vitrage comportant une vitre bombée et remarquable en ce que ladite vitre comporte une feuille de verre extérieure, une feuille de verre intérieure, ainsi qu'une feuille de matière plastique, ladite feuille de verre intérieure ayant subi une opération de trempe chimique et présentant une épaisseur comprise 0,40 et 2,10 mm, voire entre 0,40 et 1,80 mm, voire entre 0,40 et 1,60 mm et remarquable également en ce que le chant de la feuille de verre intérieure est situé au-delà du chant de la feuille de matière plastique et du chant de la feuille de verre extérieure sur une partie au moins (c'est-à-dire sur au moins une partie/un bord, ou sur plusieurs parties/bords ou sur la totalité/périphérie) de la longueur du chant de ladite feuille de verre intérieure. L'agencement d'ouverture vitrée décrit dans ce document présente plusieurs inconvénients. En premier lieu, la feuille de verre intérieure de la vitre subit, lors de son processus de fabrication, une opération de trempe chimique afin d'augmenter sa résistance mécanique. Lors de cette opération, des contraintes de surface sont introduites permettant ainsi d'obtenir une plus grande résistance mécanique comparée à une feuille de verre n'ayant pas subi cette opération. Les contraintes de surface introduites sont de l'ordre de 200 MPa. Un des inconvénients de cette opération est qu'elle prend beaucoup de temps. En effet, la feuille de verre intérieure est maintenue pendant plusieurs heures dans différents bains de sels afin d'obtenir ces contraintes de surface. Un autre inconvénient de cette opération est qu'elle a tendance à fragiliser la feuille de verre intérieure. Il est ainsi nécessaire de prendre des précautions particulières lors de sa manipulation, ajoutant ainsi encore une durée supplémentaire au temps total nécessaire pour produire une telle feuille de verre. Les coûts de production sont par conséquent très élevés.

Enfin, l'art antérieur connaît de la demande de brevet internationale WO 2018/078281 un vitrage qui comporte une vitre remarquable en ce que le chant de la feuille de verre intérieure est situé au-delà du chant de la feuille de matière plastique et du chant de la feuille de verre extérieure sur une partie au moins de la longueur du chant de ladite feuille de verre intérieure et en ce que le chant de ladite feuille de verre intérieure comporte une couche de protection sur une partie au moins de la longueur du chant de ladite feuille de verre intérieure qui est situé au-delà du chant de ladite feuille de matière plastique et du chant de ladite feuille de verre extérieure et de préférence le chant de ladite feuille de verre intérieure comporte une couche de protection sur la totalité de la longueur du chant de ladite feuille de verre intérieure qui est situé au-delà du chant de ladite feuille de matière plastique et du chant de ladite feuille de verre extérieure. Cette couche de protection permet de protéger le bord de la feuille de verre intérieure afin d'empêcher sa dégradation et à la fois protéger les usagers en raison du caractère potentiellement tranchant du bord de la feuille de verre intérieure, au regard de son épaisseur et en raison de sa nature car la feuille de verre intérieure a subi une trempe chimique. La solution décrite dans cette demande de brevet permet de résoudre en partie l'un des problèmes liés à la manipulation de la feuille de verre intérieure lors de sa production. En revanche, cette solution ne permet pas de réduire considérablement le temps de production.

L'art antérieur connaît en outre de la demande de brevet européen N° EP 600766 une configuration relativement épaisse de vitrage feuilleté, avec un débord périphérique.

Le but de la présente invention est donc de proposer un agencement de vitrage mobile pouvant à la fois être fabriqué rapidement, à moindre coût, manipulable facilement et peu fragile.

La présente invention se rapporte ainsi dans son acception la plus large à un vitrage de véhicule selon la revendication 1. Ce vitrage comporte une vitre ainsi que des moyens pour permettre la mobilité de ladite vitre en translation verticale par rapport à une porte dudit véhicule, ladite vitre étant bombée et feuilletée et comprenant au moins une feuille de verre extérieure, une feuille de verre intérieure, ainsi qu'une feuille de matière adhésive située entre ladite feuille de verre extérieure et ladite feuille de verre intérieure, chaque feuille présentant un chant périphérique, ladite vitre présentant un bord haut, un bord bas, un premier bord latéral et un second bord latéral.

Ledit vitrage est remarquable en ce que ladite feuille de verre extérieure et ladite feuille de verre intérieure sont chacune une feuille de verre ayant subi un traitement thermique de trempe ou de semi-trempe et présentent chacune une épaisseur telle que l'épaisseur de ladite feuille de verre intérieure est inférieure ou égale à l'épaisseur de ladite feuille de verre extérieure et en ce que le chant de ladite feuille de verre intérieure est situé au-delà du chant de ladite feuille de matière adhésive et du chant de ladite feuille de verre extérieure uniquement :
- sur une partie au moins de, voire toute, la longueur dudit premier bord latéral de ladite vitre et/ou
- sur une partie au moins de, voire toute, la longueur dudit second bord latéral de ladite vitre.

Le chant de ladite feuille de verre intérieure est alors situé au-delà du chant de ladite feuille de matière adhésive et du chant de ladite feuille de verre extérieure :
- uniquement sur une partie au moins de, voire toute, la longueur dudit premier bord latéral de ladite vitre et/ou,
- uniquement sur une partie au moins de, voire toute, la longueur dudit second bord latéral de ladite vitre,
- sans être situé au-delà du chant de ladite feuille de matière adhésive et du chant de ladite feuille de verre extérieur sur une partie au moins de, voire toute, la longueur dudit bord haut de la vitre,
- sans être situé au-delà du chant de ladite feuille de matière adhésive et du chant de ladite feuille de verre extérieur sur une partie au moins de, voire toute, la longueur dudit bord bas de la vitre.

Ainsi, la vitre est plus facile à fabriquer car la (ou les) partie(s) du chant de ladite feuille de verre intérieure qui ne s'étend(ent) pas au-delà du chant de ladite feuille de matière adhésive et du chant de ladite feuille de verre extérieure peut(peuvent) être telle(s) que le chant de ladite feuille de verre intérieure est alors dans la continuité du chant de ladite feuille de matière adhésive et du chant de ladite feuille de verre extérieure ; cette(ces) partie(s) peut(peuvent) alors servir de partie(s) de référence pour le positionnement de la feuille de verre intérieure par rapport aux deux autres feuilles lors de la fabrication de la vitre (feuilletage).

La vitre est encore plus facile à fabriquer lorsque le chant de ladite feuille de verre intérieure est situé au-delà du chant de ladite feuille de matière adhésive et du chant de ladite feuille de verre extérieure uniquement
- à la fois sur toute la longueur dudit premier bord latéral de ladite vitre et
- à la fois sur toute la longueur dudit second bord latéral de ladite vitre,
car les débords latéraux sont plus faciles à guider ; cela limite le risque d'un débord latéral partiel se coince lors de la fabrication en série.

La vitre est une vitre feuilletée dans le sens où il n'y a pas d'espace gazeux ou d'espace vide entre les feuilles qui constituent la vitre.

Avantageusement, l'épaisseur de ladite feuille de verre extérieure est comprise entre 1,60 mm et 3,85 mm.

Avantageusement, l'épaisseur de ladite feuille de verre intérieure est comprise entre 0,70 mm et 2,60 mm.

Dans un mode préféré de réalisation de la présente invention, l'épaisseur de ladite feuille de verre intérieure est comprise 1,00 mm et 2,20 mm.

Avantageusement, ladite feuille de verre intérieure présente des contraintes de surface au maximum de 20 MPa, de 30 MPa et de 40 MPa respectivement pour une épaisseur de ladite feuille de verre intérieure d'environ 1,10 mm, d'environ 1,60 mm et d'environ 2,10 mm. Le terme « environ » désigne ici une valeur considérée par l'homme du métier comme une valeur standard, même si localement cette valeur peut varier dans une fourchette de plus ou moins 10 %.

Selon une variante de l'invention, vu en coupe selon l'épaisseur de la vitre, le chant de ladite feuille de verre intérieure est dans la continuité du chant de ladite feuille de matière adhésive et du chant de ladite feuille de verre extérieure sur toute la longueur dudit bord haut de ladite vitre.

Selon une autre variante de l'invention, vu en coupe selon l'épaisseur de la vitre, le chant de ladite feuille de verre intérieure est dans la continuité du chant de ladite feuille de verre extérieure sur toute la longueur dudit bord bas de ladite vitre.

De préférence, le chant de ladite feuille de verre intérieure s'étend au-delà du chant de ladite feuille de verre extérieure en formant un décalage centrifuge sur une partie au moins de, voire toute, la longueur dudit premier bord latéral et/ou sur une partie au moins de, voire toute, la longueur dudit second bord latéral qui est compris entre 2,0 et 30,0 mm, voire entre 3,0 et 20,0 mm, ledit décalage étant de préférence constant selon la longueur dudit premier bord latéral et/ou dudit second bord latéral.

De préférence, ledit décalage est destiné à être guidé dans un élément de guidage et d'étanchéité fixé audit véhicule.

Avantageusement, ladite feuille de verre extérieure comporte une face extérieure, ladite face extérieure étant située dans le prolongement d'une partie de carrosserie dudit véhicule adjacente en périphérie, telle qu'une pièce de recouvrement.

Dans le présent document, pour les plages mentionnées les bornes des plages sont incluses dans les plages.

Le « chant », ou « rive », désigne le côté étroit d'une feuille, qui est situé sensiblement transversalement entre les deux faces principales d'une feuille.

Le fait que le chant de ladite feuille de verre intérieure est situé au-delà à la fois du chant de ladite feuille de matière adhésive et du chant de ladite feuille de verre extérieure le long d'au moins une partie de sa longueur permet de réaliser un débord de ladite feuille de verre intérieure par rapport à ladite feuille de matière adhésive et ladite feuille de verre extérieure. Ce débord est présent le long d'un des deux bords latéraux de la vitre ou le long des deux bords latéraux de la vitre. Il n'est, de préférence pas du tout présent le long du bord bas et le long du bord haut de la vitre.

Ce débord est prévu dans une partie visible du vitrage ; dans une partie qui est visible par les usagers du véhicule. Ce débord peut ne pas être présent dans une partie du vitrage qui reste cachée à l'intérieur de la carrosserie du véhicule, quel que soit l'état (ouvert, fermé, ou entre ouvert et fermé) du vitrage par rapport à l'élément de carrosserie qui le supporte).

Dans une variante indépendante et avantageuse, le chant de ladite feuille de verre intérieure s'étend au-delà du chant de ladite feuille de matière adhésive et du chant de ladite feuille de verre extérieure sur une partie seulement de la longueur du premier bord latéral ou du second bord latéral de ladite feuille de verre intérieure.

Ainsi, la vitre est encore plus facile à fabriquer car la (ou les) partie(s) du chant de ladite feuille de verre intérieure qui ne s'étend(ent) pas au-delà du chant de ladite feuille de matière adhésive et du chant de ladite feuille de verre extérieure peut(peuvent) être telle(s) que le chant de ladite feuille de verre intérieure est alors dans la continuité du chant de ladite feuille de matière adhésive et du chant de ladite feuille de verre extérieure ; cette(ces) partie(s) peut(peuvent) alors servir de partie(s) de référence pour le positionnement de la feuille de verre intérieure par rapport aux deux autres feuilles lors de la fabrication de la vitre (feuilletage).

En outre, cette(ces) partie(s) peut(peuvent) être située(s) en vis-à-vis des moyens permettant la mobilité de ladite vitre en translation par rapport à la porte dudit véhicule (c'est-à-dire le ou les porte-vitre) afin d'augmenter la tenue mécanique de la vitre à cet endroit.

La présente invention a été développée pour les vitrages incorporés dans des portières présentant des montants latéraux et un montant supérieur au niveau du vitrage lorsque celui-ci est remonté (fermé).

Avantageusement surtout, la présente invention permet de réaliser un vitrage qui, lorsqu'il est fermé, comporte une face extérieure qui est située dans le prolongement de la partie de la porte adjacente en périphérie ; ce qui est connu sous la notion technique de « vitrage affleurant », ou « flush glazing » en anglais.

La présente invention sera mieux comprise à la lecture de la description détaillée ci-après d'exemples de réalisation non limitatifs et des figures ci-jointes :
[Fig. 1] illustre une vue de face extérieure d'un vitrage avant de véhicule selon un premier mode de réalisation de l'invention ;
[Fig. 2] illustre une vue de face intérieure du vitrage de la figure 1 ;
[Fig. 3] illustre une vue partielle en coupe horizontale d'un bord avant du vitrage de la figure 1 ;
[Fig. 4] illustre une vue en coupe transversale verticale d'un porte vitre ;
[Fig. 5] illustre une vue de profil d'un vitrage avant de véhicule muni de deux porte-vitre selon l'invention pendant l'opération de fixation d'un porte-vitre.

Il est précisé que les proportions entre les divers éléments représentés dans les figures ne sont pas rigoureusement respectées afin d'en faciliter la lecture.

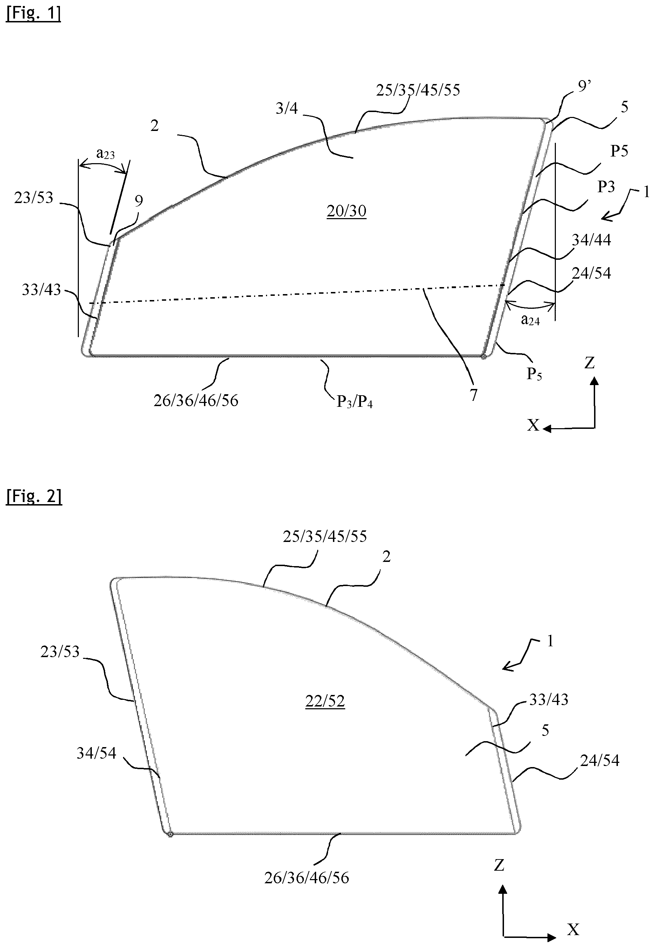

La figure 1 illustre un vitrage 1 latéral gauche d'un véhicule, selon un premier mode de réalisation de l'invention, considéré comme étant vu de l'extérieur de ce véhicule.

Il s'agit en particulier d'un vitrage latéral d'une porte d'un véhicule automobile qui est mobile entre translation par rapport à cette porte sensiblement selon la verticale entre une position ouverte dans laquelle le vitrage se situe en totalité ou en quasi-totalité à l'intérieur de la porte et une position fermée dans laquelle le vitrage ferme une baie de la porte.

Ce vitrage réalise ainsi en position fermée une séparation verticale entre un espace intérieure I qui est à l'intérieur du véhicule et un espace extérieur E qui est à l'extérieur du véhicule.

Les notions de « extérieur » et « intérieur » sont donc considérées dans le présent document respectivement par rapport à cet espace extérieur E et cet espace intérieur I.

Comme il s'agit d'un vitrage latéral, celui-ci s'étend pour l'essentiel selon l'axe généralement appelé « l'axe X » du véhicule, qui est l'axe longitudinal central d'avancé du véhicule équipé du vitrage selon l'invention en tant que vitrage latéral du côté gauche du véhicule et qui correspond à l'axe horizontal dans le plan de la feuille en figure 1.

Dans le cadre du présent document, la notion de « centripète » et celle de « centrifuge » est à considérer dans le plan de la feuille en figure 1, exprimé par rapport au centre du vitrage, selon les axes X et Z ; le sens centripète est en direction de ce centre alors que le sens centrifuge s'éloigne de ce centre.

Dans le mode de réalisation de la figure 1, le vitrage 1 est d'un seul tenant.

Dans l'exemple de réalisation illustré, le vitrage 1 comporte une vitre 2 qui est bombée (c'est-à-dire non plate) et feuilletée. Toutefois, pour plus de simplicité, il est considéré dans les dessins des figures 1, 2 et 3 que la vitre 2 est plate.

La vitre 2 du vitrage 1 est une vitre feuilletée qui comporte, de l'extérieur vers l'intérieur, au moins, dans cet ordre : une feuille de verre extérieure 3, une feuille intercalaire de matière adhésive 4 puis une feuille de verre intérieure 5 ; toutefois, il est possible qu'au moins une autre feuille soit intercalée entre la feuille de verre extérieure 3 et la feuille intercalaire de matière adhésive 4 ou entre la feuille intercalaire de matière adhésive 4 et feuille de verre intérieure 5. En outre, la vitre 2 présente un premier bord latéral 23, un second bord latéral 24, un bord haut 25 et un bord bas 26. Le premier bord latéral 23 et le second bord latéral 24 de la vitre 2 sont disposés respectivement dans la partie de la vitre 2 orientée vers l'avant et dans la partie de la vitre 2 orientée vers l'arrière du véhicule. Le bord haut 25 et le bord bas 26 de la vitre 2 sont disposés respectivement dans la partie de la vitre 2 orientée vers le toit et dans la partie de la vitre 2 orientée vers le châssis du véhicule.

La feuille de verre extérieure 3 présente une face extérieure 30 qui est orientée vers l'extérieur E, une face intercalaire 32 qui est orientée vers la feuille intercalaire de matière adhésive 4, et un chant 31 périphérique situé entre ces deux faces. En outre, la feuille de verre extérieure 3 présente un premier bord latéral 33, un second bord latéral 34, un bord haut 35 et un bord bas 36. Le premier bord latéral 33 et le second bord latéral 34 de la feuille de verre extérieure 3 sont disposés respectivement dans la partie de la feuille de verre extérieure 3 orientée vers l'avant et dans la partie de la feuille de verre extérieure 3 orientée vers l'arrière du véhicule. Le bord haut 35 et le bord bas 36 de la feuille de verre extérieure 3 sont disposés respectivement dans la partie de la feuille de verre extérieure 3 orientée vers le toit et dans la partie de la feuille de verre extérieure 3 orientée vers le châssis du véhicule.

La feuille de verre intérieure 5 présente une face intercalaire 50 qui est orientée vers la feuille intercalaire de matière adhésive 4, une face intérieure 52 qui est orientée vers l'intérieur I et un chant 51 périphérique situé entre ces deux faces. En outre, la feuille de verre intérieure 5 présente un premier bord latéral 53, un second bord latéral 54, un bord haut 55 et un bord bas 56. Le premier bord latéral 53 et le second bord latéral 54 de la feuille de verre intérieure 5 sont disposés respectivement dans la partie de la feuille de verre intérieure 5 orientée vers l'avant et dans la partie de la feuille de verre intérieure 5 orientée vers l'arrière du véhicule. Le bord haut 55 et le bord bas 56 de la feuille de verre intérieure 5 sont disposés respectivement dans la partie de la feuille de verre intérieure 5 orientée vers le toit et dans la partie de la feuille de verre intérieure 5 orientée vers le châssis du véhicule.

La feuille intercalaire de matière adhésive 4 présente une face intercalaire extérieure 40 qui est orientée vers la face intercalaire 32 et qui est ici au contact de cette face intercalaire 32, une face intercalaire intérieure 42 qui est orientée vers la face intercalaire 50 et qui est ici au contact de cette face intercalaire 50, ainsi qu'un chant 41 périphérique qui est situé entre ces deux faces intercalaires 40, 42. En outre, la feuille intercalaire de matière adhésive 4 présente un premier bord latéral 43, un second bord latéral 44, un bord haut 45 et un bord bas 46. Le premier bord latéral 43 et le second bord latéral 44 de la feuille intercalaire de matière adhésive 4 sont disposés respectivement dans la partie de la feuille intercalaire de matière adhésive 4 orientée vers l'avant et dans la partie de la feuille intercalaire de matière adhésive 4 orientée vers l'arrière du véhicule. Le bord haut 45 et le bord bas 46 de la feuille intercalaire de matière adhésive 4 sont disposés respectivement dans la partie de la feuille intercalaire de matière adhésive 4 orientée vers le toit et dans la partie de la feuille intercalaire de matière adhésive 4 orientée vers le châssis du véhicule.

La feuille de verre extérieure 3 est par exemple une feuille de verre ayant subi une opération de bombage thermique avant la fabrication de la vitre 2 feuilletée et présentant une épaisseur e₃ comprise entre 1,60 et 3,85 mm, par exemple de 3,15 mm.

La feuille de matière adhésive 4 intercalaire est par exemple une feuille en polyvinylbutyral (PVB) présentant une épaisseur e₄ comprise entre 0,30 et 1,50 mm, par exemple de 0,78 mm. Cette feuille de matière adhésive 4 présente de préférence les mêmes dimensions de longueur selon l'axe X et de hauteur selon l'axe Z, que la feuille de verre extérieure 3.

La feuille de verre intérieure 5 est une feuille de verre ayant subi une opération de trempe thermique, ou de semi-trempe, et présentant une épaisseur es comprise 0,70 et 2,60 mm, voire comprise 0,70 et 2,50 mm, voire entre 0,70 et 2,30 mm, voire entre 0,70 et 2,10 mm, par exemple de 1,10 mm ou 1,60 mm. Les opérations de trempe ou semi-trempe ont pour avantage d'être très rapides à réaliser. En effet, en moyenne, il est possible de produire environ 20 feuilles de verre en une minute. Par ailleurs, l'opération de trempe, ou de semi-trempe, permet d'introduire des contraintes de surface de l'ordre de 20 MPa, 30 MPa et 40 MPa respectivement sur une feuille de verre ayant une épaisseur d'environ 1,10 mm, d'environ 1,60 mm et d'environ 2,10 mm.

De préférence la feuille de verre intérieure 5 n'est pas bombée avant la fabrication de la vitre 2 feuilletée ; c'est ce feuilletage qui va lui donner sa forme bombée, en suivant la forme de la feuille de verre extérieure 3. Cela est rendu possible grâce à la faible épaisseur de la feuille de verre intérieure 5.

Dans le cas où la vitre 2 comporte une ou plusieurs autre(s) feuille(s) en plus des trois mentionnées précédemment, la feuille de verre intérieure 5 qui a subi une trempe thermique, ou une semi-trempe, est la feuille de la vitre feuilletée qui est la plus à l'intérieure.

Les figures 1 à 3 montrent que la vitre 2 présente une face extérieure 20 qui est réalisée par la face extérieure 30 de la feuille de verre extérieure 3, une face intérieure 22 qui est réalisée par la face intérieure 52 de la feuille de verre intérieure 5 et un chant 21 périphérique situé entre ces deux faces, correspondant au chant 31 périphérique de la feuille de verre extérieure 3, au chant 41 périphérique de la feuille de matière adhésive 4 et au chant 51 périphérique de la feuille de verre intérieure 5.

Selon l'invention, le chant 51 de la feuille de verre intérieure 5 est situé au-delà, dans une direction centrifuge, et selon l'axe X, du chant 41 de ladite feuille de matière adhésive 4 et du chant 31 de la feuille de verre extérieure 3 sur une partie au moins de la longueur du chant 51 de la feuille de verre intérieure 5, c'est-à-dire le long d'une partie au moins de la longueur du chant 51 de la feuille de verre intérieure 5.

Ainsi, la feuille de verre intérieure 5 présente au moins une longueur selon l'axe X qui est (sont) supérieure(s) à celle(s) de la feuille de verre extérieure 3.

Le premier bord latéral 23 de la vitre 2 s'étend longitudinalement en formant un premier angle a₂₃ avec l'axe Z. Le second bord latéral 24 de la vitre 2 s'étend longitudinalement en formant un second angle a₂₄ avec l'axe Z. Le premier angle a₂₃ a une valeur absolue comprise entre 0 et 30°. Le second angle a₂₄ a également une valeur absolue comprise entre 0 et 30°. De préférence, le premier angle a₂₃ et le second angle a₂₄ sont sensiblement égaux en valeur absolue. Dans un mode particulier de réalisation de l'invention, le premier angle a₂₃ et le second angle a₂₄ ont une valeur absolue d'environ 20°.

Le chant 51 de la feuille de verre intérieure 5 est situé au-delà, dans une direction centrifuge, du chant 41 de la feuille de matière adhésive 4 et du chant 31 de la feuille de verre extérieure 3 à la fois :
- sur au moins une partie de la longueur du premier bord latéral 53 de la feuille de verre intérieure 5 ; et même ici sur la totalité de la longueur du premier bord latéral 53 ; et
- sur au moins une partie de la longueur du second bord latéral 54 de la feuille de verre intérieure 5 ; et même ici sur la totalité de la longueur du second bord latéral 54.

Dans une alternative, le chant 51 de la feuille de verre intérieure 5 est situé au-delà, dans une direction centrifuge, du chant 41 de la feuille de matière adhésive 4 et du chant 31 de la feuille de verre extérieure 3 uniquement sur une partie seulement, voire sur la totalité, de la longueur du premier bord latéral 53 de la feuille de verre intérieure 5. Dans une autre alternative, le chant 51 de la feuille de verre intérieure 5 est situé au-delà, dans une direction centrifuge, du chant 41 de la feuille de matière adhésive 4 et du chant 31 de la feuille de verre extérieure 3 uniquement sur une partie seulement, voire sur la totalité, de la longueur du premier bord latéral 54 de la feuille de verre intérieure 5.

Le premier bord 53 de ladite feuille de verre intérieure 5 est ainsi situé au-delà, dans une direction centrifuge, et selon l'axe X, du chant 31 de ladite feuille de verre extérieure 3 (et du chant 41 de la feuille de matière adhésive 4) en formant un premier débord 9, ou débord, centrifuge. Ce décalage peut être compris entre 2,0 et 30,0 mm, voire entre 3,0 et 20,0 mm, comme par exemple ici de 2,85 mm ; Ce premier débord 9 est de préférence constant selon sa longueur. Par ailleurs, le second bord 54 de ladite feuille de verre intérieure 5 est ainsi situé au-delà, dans une direction centrifuge, et selon l'axe X, du chant 31 de ladite feuille de verre extérieure 3 (et du chant 41 de la feuille de matière adhésive 4) en formant un second débord 9', ou débord, centrifuge. Ce décalage peut être compris entre 2,0 et 30,0 mm, voire entre 3,0 et 20,0 mm, comme par exemple ici de 2,85 mm ; Ce second débord 9' est de préférence constant selon sa longueur.

Dans un mode de réalisation particulier de l'invention, la feuille de verre intérieure 5 comporte uniquement le premier débord 9, le second bord 54 étant dans la continuité, suivant l'axe Y, du chant 31 de ladite feuille de verre extérieure 3 et du chant 41 de ladite feuille de matière adhésive 4. Dans un autre mode de réalisation particulier de l'invention, la feuille de verre intérieure 5 comporte uniquement le second débord 9', le premier bord 53 étant dans la continuité, suivant l'axe Y, du chant 31 de ladite feuille de verre extérieure 3 et du chant 41 de ladite feuille de matière adhésive 4. La géométrie des premier et second débords 9, 9' est bien adaptée au procédé de production des feuilles de verre étant donné qu'ils sont orientés dans le sens longitudinal d'avancement dudit procédé. Par conséquent, le risque de détérioration de la feuille de verre 5 est considérablement réduit lors de sa fabrication.

En figure 1, le joint lécheur 7 matérialise le haut du caisson de la portière à l'intérieur duquel le vitrage 1 coulisse, lorsque le vitrage est fermé. Dans cette position de vitrage fermé, toute la partie du vitrage qui est située sous ce joint lécheur 7 peut ne pas comporter de décalage : dans cette partie sous le joint lécheur 7, à l'intérieur du caisson de la portière lorsque le vitrage est fermé, il est possible que le chant 51 de la feuille de verre intérieure 5 sur une (ou plusieurs) partie(s) de sa longueur, voire sur la totalité de sa longueur, soit dans la continuité du chant 31 de la feuille de verre extérieure 3.

Il est possible par exemple que le chant 51 de la feuille de verre intérieure 5 soit dans la continuité du chant 31 de la feuille de verre extérieure 3 seulement là où sont les moyens pour permettre la mobilité de la vitre 2 en translation par rapport à une porte du véhicule.

Au-dessus du joint lécheur 7 la porte du véhicule peut comporter au moins une partie sans montant. Ainsi, il est possible que la porte :
- ne comporte pas de montant latéral avant et que ce soit la partie de carrosserie adjacente, autrement appelée « le pilier A » ou « A-pillar » en anglais, qui guide le vitrage, et/ou
- ne comporte pas de montant latéral arrière et que ce soit la partie de carrosserie adjacente, autrement appelée « le pilier B » ou « B-pillar » en anglais, qui guide le vitrage.

Dans le mode de réalisation illustré en figure 1, le chant 51 de ladite feuille de verre intérieure 5 est situé au-delà à la fois du chant 41 de la feuille de matière adhésive 4 et à la fois du chant 31 de la feuille de verre extérieure 3 sur une partie seulement du périmètre du chant 51 de la feuille de verre intérieure 5. En l'occurrence, le débord est présent le long des bords latéraux, mais n'est pas présent le long du bord bas ni le long du bord haut de la vitre.

Ainsi, ces trois chants 31, 41, 51 sont dans la continuité l'un de l'autre selon l'axe Y en partie basse et en partie haute de la vitre, mais ne sont pas dans la continuité l'un de l'autre selon l'axe X au moins le long du premier bord latéral 23 ou le long du second bord latéral 24 de la vitre 2 : le chant 51 de la feuille de verre intérieure 5 est décalé en direction centrifuge, c'est-à-dire selon l'axe X au moins le long du premier bord latéral 23 ou le long du second bord latéral 24 de la vitre 2, voire de préférence encore le long du premier bord latéral 23 et le long du second bord latéral 24 de la vitre.

Chaque feuille 3, 4, 5 présente un pourtour P₃, P₄, P₅ périphérique: le pourtour P₅ de la feuille de verre intérieure 5 s'étend au-delà du pourtour P₄ de la feuille de matière plastique adhésive 4 et du pourtour P₃ de la feuille de verre extérieure 3 sur au moins la longueur du premier débord latéral 23 ou au moins sur la longueur du second débord 24 de la vitre 2, voire sur la longueur du premier débord 23 et sur la longueur du second débord 24 de la vitre 2.

Le pourtour P₅ de la feuille de verre intérieure 5 est dans la continuité latérale du pourtour P₃ de la feuille de verre extérieure 3 uniquement selon le bord haut 25 et selon le bord bas 26 de la vitre 2 ; le long du bord bas 26 : dans la partie du vitrage qui reste à l'intérieur de ladite porte lorsque le vitrage est fermé, afin de participer au renfort de la vitre à cet endroit en vue d'augmenter la fiabilité de l'attache des porte-vitre à la vitre.

Dans une variante, le chant 51 de la feuille de verre intérieure 5 s'étend au-delà du chant 31 de la feuille de verre extérieure 3 en formant respectivement le premier débord 9, ou le second débord 9', ou décalage, centrifuge le long d'une partie seulement du premier bord latéral 23 ou du second bord latéral 24 de la vitre 2, voire en formant respectivement un premier débord 9 et un second débord 9', ou décalage, centrifuge le long d'une partie seulement du premier bord latéral 23 et du second bord latéral 24 de la vitre 2.

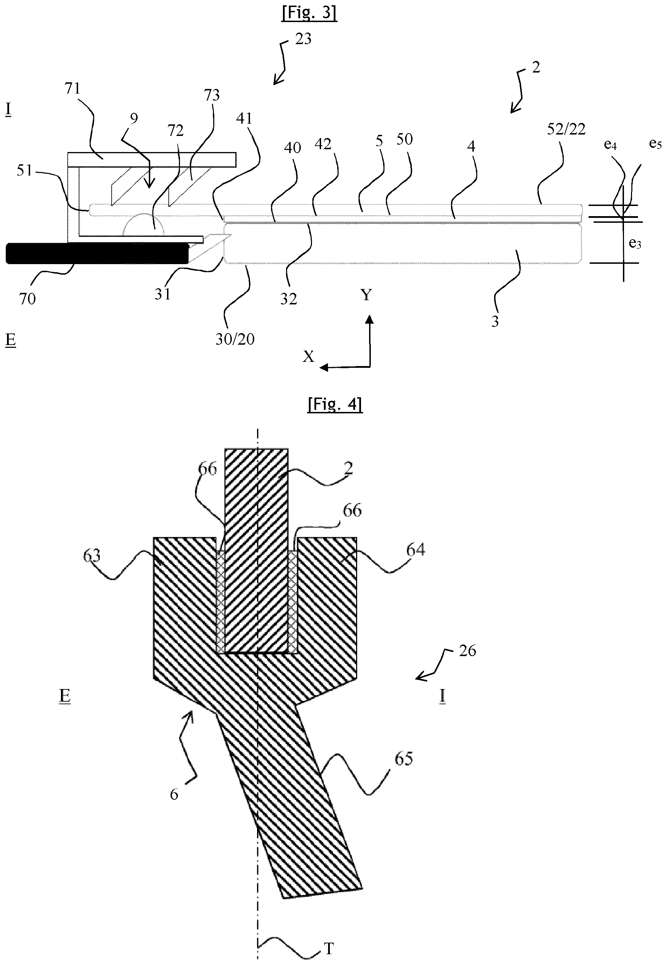

La figure 3 illustre une vue partielle en coupe du premier bord 23 de la vitre 2 et montre l'un des éléments de guidage vertical du vitrage 1 qui est fixé au véhicule, dénommé couramment A-pillar en anglais, ou le pilier A. Le pilier A comporte, notamment, un premier élément de guidage et d'étanchéité 71 permettant de guider en translation suivant l'axe Z la vitre 2 et une première pièce de recouvrement 70 ayant pour fonction de cacher l'élément de guidage et d'étanchéité 71. Le premier débord 9 du premier bord latéral 23 est en contact et glisse entre une protubérance sphérique 72 et un joint 73 comportant deux lèvres. Dans une alternative, le joint 73 peut comporter une lèvre ou plus de deux lèvres. Un autre élément de guidage (non visible) du vitrage 1 fixé au véhicule, dénommé couramment B-pillar en anglais, ou le pilier B, est orienté vers l'arrière dudit véhicule. Le pilier B comporte, notamment, un second élément de guidage et d'étanchéité 71' permettant de guider en translation suivant l'axe Z la vitre 2 et une seconde pièce de recouvrement 70' ayant pour fonction de cacher l'élément de guidage et d'étanchéité 71'. Le second débord 9' (non visible) du second bord latéral 24 est en contact et glisse entre une protubérance sphérique 72' et un joint comportant 73' deux lèvres. Dans une alternative, le joint 73' peut comporter une lèvre ou plus de deux lèvres.

Le vitrage 1 comporte, outre la vitre 2, le long d'au moins une partie d'au moins un bord bas 26, des moyens pour permettre la mobilité de la vitre 2 en translation par rapport à une porte du véhicule. Ces moyens comprennent au moins un et de préférence au moins deux porte-vitre 6, 6' présentant par exemple en coupe transversale sensiblement une forme en h inversé.

La figure 4 illustre une vue de détail d'un porte-vitre 6. Ce porte-vitre 6 présente ainsi :
- une première partie constituée de deux parois parallèles 63, 64 reliées à leur base et formant une rainure longitudinale, c'est-à-dire formant en coupe transversale une forme en U, et
- une deuxième partie constituée d'une queue 65 s'étendant à l'opposé des parois parallèles 63, 64 par rapport à la base reliant ces parois.

Dans la version illustrée, l'assemblage est opéré de manière à ce que lesdites parois parallèles 63, 64 de ladite forme en h enchâssent la vitre 2 dans sa partie inférieure, la queue 65 se trouvant alors sensiblement dans le prolongement de la vitre 2.

Cette forme en h du porte-vitre est particulièrement avantageuse car elle permet la transmission des efforts entre le porte-vitre et la vitre selon une grande surface correspondant à la somme des surfaces intérieures des parois parallèles 63, 64 ; toutefois, il est tout à possible d'utiliser une simple platine, cette platine présentant par exemple au moins deux parties : une première partie pour la coopération avec la vitre et une deuxième partie pour la coopération avec le mécanisme d'entraînement (monté/descente) de la vitre.

Sur la figure 4, la vitre 2 est bombé et les parois parallèles 63, 64 et la queue 65 sont planes ; toutefois il est possible que les parois parallèles 63, 64 et /ou la queue 65 soient bombées. La queue 65 s'étend environ à partir de la moitié de la base reliant les parois parallèles 63, 64, mais il est également possible de positionner la queue 65 dans le prolongement de l'une ou de l'autre des parois parallèles 63, 64.

Sur la figure 4 la queue 65 n'est pas parallèle aux parois 63, 64. L'axe T illustrant le plan moyen du vitrage 1 à son extrémité inférieure lorsque ce dernier est correctement positionné vis-à-vis du porte-vitre 6, la queue 65 est orientée d'un angle non nul vis-à-vis de l'axe T et qui est fonction du bombage de la vitre 2.

La queue 65 est destinée à être reliée à un système d'entraînement motorisé non illustré pour permettre la montée et la descente du vitrage 1 dans la portière du véhicule.

L'assemblage des porte-vitre 6, 6' à la vitre 2 est opéré sur un gabarit permettant le contrôle des tolérances sur l'ensemble porte-vitre 6 / vitre 2.

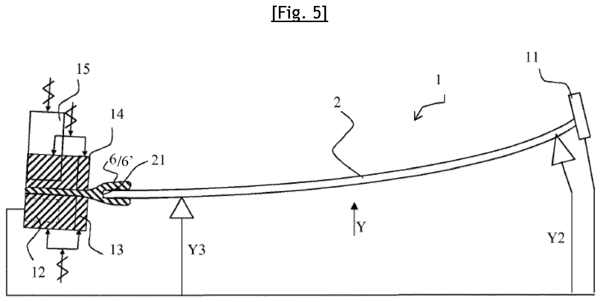

Avant le positionnement et la fixation des porte-vitre, la vitre 2 est d'abord correctement positionnée (« focalisée ») dans un gabarit de montage 11, visible en figure 5, présentant une pluralité de butées de positionnement.

L'une des butées de positionnement est désignée sous l'appellation point Y3 et est, de préférence, positionné sur la ligne du joint lécheur 7 (non visible sur les figures 2 à 5) illustrant la position de ce joint de contact bas avec la portière lorsque le vitrage est fermé.

Une matrice 12, illustrée en pointillés, solidaire du référentiel de la vitre 2 accueille les queux 65 de chaque porte-vitre 6.

Des mors mobiles inférieur 13 et supérieur 14 viennent ensuite enserrer la queue 65.

Quelle que soit l'orientation des porte-vitre 6 dans la direction Y, les mords mobiles 13, 14 viennent emprisonner les porte-vitre 6 sans détériorer l'iso statisme.

Le (ou les) porte-vitre 6, 6' est (ou sont) encollés(s) à l'aide d'une colle par exemple de polyuréthanne, puis « chaussé(s) » sur la vitre 2, c'est-à-dire qu'il(s) est (ou sont) positionné(s) de manière à ce que la vitre soit présente dans la forme en U, en butée ou non, en insérant entre lesdites parois parallèles 63, 64 et la vitre 2 des inserts 66 en matière plastique, comme par exemple du polypropylène.

Dans une variante, on propose de remplacer la phase de positionnement d'inserts 66 rapportés par une phase d'injection in-situ de matière adhésive destinée à former les inserts 66, en résine thermofusible thermoplastique, par exemple à base de polyamide.

L'injection des inserts lorsque la vitre et les porte-vitre sont correctement positionnés les uns par rapport aux autres garantit ainsi la position du porte-vitre, quel que soit le galbe de la vitre.

La résine thermofusible utilisée présente une limite d'élasticité d'environ 5,5 N/mm² et une résistance à la rupture de 11 N/mm², calculées selon la norme DIN 53455. Elle doit être utilisée à une température d'environ 220 °C et présente à cette température une viscosité de l'ordre de 5000 mPa.s, mesurée selon la norme ASTM D 3236.

Lors de la mise en oeuvre de cette solution, il est également possible d'utiliser une colle supplémentaire pour fixer parfaitement l'insert aux parois parallèles et à la vitre.

Les inserts 66 rapportés ou fabriqués in-situ par injection servent ainsi à maintenir la vitre 2 par rapport aux parois parallèles 63, 64 vis-à-vis des efforts latéraux.

Les porte-vitre utilisés sont, de préférence, en alliage d'aluminium. A titre d'exemple, avec un alliage d'aluminium de nuance 6060 (AGS), une force de pressage verticale de 30 à 50 tonnes est suffisante, c'est-à-dire rapporté à la taille des porte-vitre, des efforts d'environ 150 GPa pour des porte-vitre en h de dimension hors-tout d'environ 40x30 mm et d'environ 450 GPa pour des porte-vitre en h de dimension hors-tout d'environ 60x60 mm.

La présente invention est décrite dans ce qui précède à titre d'exemple. Il est entendu que l'homme du métier est à même de réaliser différentes variantes de l'invention sans pour autant sortir du cadre du brevet tel que défini par les revendications.

## Revendications

1. Vitrage (1) de véhicule, comportant une vitre (2) ainsi que des moyens pour permettre la mobilité de ladite vitre (2) en translation verticale par rapport à une porte dudit véhicule, ladite vitre (2) étant bombée et feuilletée et comprenant au moins une feuille de verre extérieure (3), une feuille de verre intérieure (5), ainsi qu'une feuille de matière adhésive (4) située entre ladite feuille de verre extérieure (3) et ladite feuille de verre intérieure (5), chaque feuille présentant un chant (31, 41, 51) périphérique, ladite vitre (2) présentant un bord haut (25), un bord bas (26), un premier bord latéral (23) et un second bord latéral (24), **caractérisé en ce que** ladite feuille de verre extérieure (3) et ladite feuille de verre intérieure (5) sont chacune une feuille de verre ayant subi un traitement thermique de trempe ou de semi-trempe et présentent chacune une épaisseur (e₃ ; es) telle que l'épaisseur (es) de ladite feuille de verre intérieure (5) est inférieure ou égale à l'épaisseur (es) de ladite feuille de verre extérieure (3) **et en ce que** le chant (51) de ladite feuille de verre intérieure (5) est situé au-delà du chant (41) de ladite feuille de matière adhésive (4) et du chant (31) de ladite feuille de verre extérieure (3) uniquement :
- sur une partie au moins de, voire toute, la longueur dudit premier bord latéral (23) de ladite vitre (2) et/ou
- sur une partie au moins de, voire toute, la longueur du second bord latéral (24) de ladite vitre (2).

2. Vitrage (1) selon la revendication 1, **caractérisé en ce que** l'épaisseur (es) de ladite feuille de verre extérieure (3) est comprise entre 1,60 mm et 3,85 mm.

3. Vitrage (1) selon l'une quelconque des revendications 1 à 2, **caractérisé en ce que** l'épaisseur (es) de ladite feuille de verre intérieure (5) est comprise entre 0,70 mm et 2,60 mm.

4. Vitrage (1) selon la revendication 3, **caractérisé en ce que** l'épaisseur (es) de ladite feuille de verre intérieure (5) est comprise entre 1,00 mm et 2,20 mm.

5. Vitrage (1) selon l'une quelconque des revendications 1 à 4, **caractérisé en ce que** ladite feuille de verre intérieure (5) présente des contraintes de surface au maximum de 20 MPa, de 30 MPa et de 40 MPa respectivement pour une épaisseur de ladite feuille de verre intérieure (5) d'environ 1,10 mm, d'environ 1,60 mm et d'environ 2,10 mm.

6. Vitrage (1) selon l'une quelconque des revendications 1 à 5, **caractérisé en ce que,** vu en coupe selon l'épaisseur, le chant (51) de ladite feuille de verre intérieure (5) est dans la continuité du chant (41) de ladite feuille de matière adhésive (4) et du chant (31) de ladite feuille de verre extérieure (3) sur toute la longueur dudit bord haut (25) de ladite vitre (2).

7. Vitrage (1) selon l'une quelconque des revendications 1 à 6, **caractérisé en ce que,** vu en coupe selon l'épaisseur, le chant (51) de ladite feuille de verre intérieure (5) est dans la continuité du chant (31) de ladite feuille de verre extérieure (3) sur toute la longueur dudit bord bas (26) de ladite vitre (2).

8. Vitrage (1) selon l'une quelconque des revendications 1 à 7, **caractérisé en ce que** le chant (51) de ladite feuille de verre intérieure (5) s'étend au-delà du chant (31) de ladite feuille de verre extérieure (3) en formant un débord (9, 9') centrifuge sur une partie au moins de, voire toute, la longueur dudit premier bord latéral (23) et/ou sur une partie au moins de, voire toute, la longueur dudit second bord latéral (24) qui est compris entre 2,0 et 30,0 mm, voire entre 3,0 et 20,0 mm, ledit débord (9, 9') étant de préférence constant selon la longueur dudit premier bord latéral (23) et/ou dudit second bord latéral (24).

9. Vitrage (1) selon l'une quelconque des revendications 1 à 8, **caractérisé en ce que** ledit débord (9, 9') est destiné à être guidé dans un élément de guidage et d'étanchéité (71, 71') fixé audit véhicule.

10. Vitrage (1) selon l'une quelconque des revendications 1 à 9, **caractérisé en ce que** ladite feuille de verre extérieure (3) comporte une face extérieure (30), ladite face extérieure (30) étant située dans le prolongement d'une partie de carrosserie dudit véhicule adjacente en périphérie, telle qu'une pièce de recouvrement (70, 70').

## Patentansprüche

1. Fahrzeugverglasung (1), umfassend ein Fenster (2) sowie Mittel zum Ermöglichen der Beweglichkeit des Fensters (2) in vertikaler Translation relativ zu einer Tür des Fahrzeugs, wobei das Fenster (2) gewölbt und laminiert ist und mindestens eine äußere Glasscheibe (3), eine innere Glasscheibe (5) sowie eine Scheibe aus Haftmaterial (4) aufweist, die zwischen der äußeren Glasscheibe (3) und der inneren Glasscheibe (5) gelegen ist, wobei jede Schicht eine Umfangskante (31, 41, 51) vorweist, wobei das Fenster (2) eine Oberkante (25), eine Unterkante (26), eine erste Seitenkante (23) und eine zweite Seitenkante (24) vorweist, **dadurch gekennzeichnet, dass** es sich bei der äußeren Glasscheibe (3) und der inneren Glasscheibe (5) jeweils um eine Glasscheibe handelt, die einer Vorspannungs- oder Halbvorspannungswärmebehandlung unterzogen wurde und jeweils eine Dicke (es ; es) vorweist, so dass die Dicke (es) der inneren Glasscheibe (5) kleiner als oder gleich der Dicke (es) der äußeren Glasscheibe (3) ist, **und dass** die Kante (51) der inneren Glasscheibe (5) über der Kante (41) der Scheibe aus Haftmaterial (4) und der Kante (31) der äußeren Glasscheibe (3) gelegen ist, nur:
- über mindestens einen Teil oder sogar die gesamte Länge der ersten Seitenkante (23) des Fensters (2) und/oder
- über mindestens einen Teil oder sogar die gesamte Länge der zweiten Seitenkante (24) des Fensters (2).

2. Verglasung (1) nach Anspruch 1, **dadurch gekennzeichnet, dass** die Dicke (es) der äußeren Glasscheibe (3) zwischen 1,60 mm und 3,85 mm liegt.

3. Verglasung (1) nach einem der Ansprüche 1 bis 2,
**dadurch gekennzeichnet, dass** die Dicke (es) der inneren Glasscheibe (5) zwischen 0,70 mm und 2,60 mm liegt.

4. Verglasung (1) nach Anspruch 3, **dadurch gekennzeichnet, dass** die Dicke (es) der inneren Glasscheibe (5) zwischen 1,00 mm und 2,20 mm liegt.

5. Verglasung (1) nach einem der Ansprüche 1 bis 4,
**dadurch gekennzeichnet, dass** die innere Glasscheibe (5) Oberflächenspannungen von maximal 20 MPa, 30 MPa beziehungsweise 40 MPa für eine Dicke der inneren Glasscheibe (5) von etwa 1,10 mm, etwa 1,60 mm und etwa 2,10 mm vorweist.

6. Verglasung (1) nach einem der Ansprüche 1 bis 5,
**dadurch gekennzeichnet, dass,** im Schnitt entlang der Dicke betrachtet, die Kante (51) der inneren Glasplatte (5) in der Kontinuität der Kante (41) der Scheibe aus Haftmaterial (4) und der Kante (31) der äußeren Glasscheibe (3) über die gesamte Länge der Oberkante (25) des Fensters (2) ist.

7. Verglasung (1) nach einem der Ansprüche 1 bis 6,
**dadurch gekennzeichnet, dass,** im Schnitt entlang der Dicke betrachtet, die Kante (51) der inneren Glasscheibe (5) in der Kontinuität der Kante (31) der äußeren Glasplatte (3) über die gesamte Länge der Unterkante (26) des Fensters (2) ist.

8. Verglasung (1) nach einem der Ansprüche 1 bis 7,
**dadurch gekennzeichnet, dass** die Kante (51) der inneren Glasscheibe (5) sich bei Ausbilden eines Zentrifugalrands (9, 9') auf mindestens einem Teil oder sogar der gesamten Länge der ersten Seitenkante (23) und/oder auf mindestens einem Teil oder sogar der gesamten Länge der zweiten Seitenkante (24), die zwischen 2,0 und 30,0 mm oder sogar zwischen 3,0 und 20,0 mm liegt, über die Kante (31) der äußeren Glasscheibe (3) erstreckt, wobei der Rand (9, 9') vorzugsweise entlang der Länge der ersten Seitenkante (23) und/oder der zweiten Seitenkante (24) konstant ist.

9. Verglasung (1) nach einem der Ansprüche 1 bis 8,
**dadurch gekennzeichnet, dass** der Rand (9, 9') dafür bestimmt ist, in einem an dem Fahrzeug befestigten Führungs- und Dichtungselement (71, 71') geführt zu werden.

10. Verglasung (1) nach einem der Ansprüche 1 bis 9,
**dadurch gekennzeichnet, dass** die äußere Glasscheibe (3) eine äußere Fläche (30) umfasst, wobei die äußere Fläche (30) in der Verlängerung eines an den Umfang angrenzenden Karosserieteils des Fahrzeugs, wie eines Verkleidungsteils (70, 70'), gelegen ist.

## Claims

1. A vehicle glazing unit (1) comprising a pane (2) and means for allowing the vertical translational movability of said pane (2) with respect to a door of said vehicle, said pane (2) being curved and laminated and comprising at least an outer glass sheet (3), an inner glass sheet (5) and a sheet of adhesive material (4) situated between said outer glass sheet (3) and said inner glass sheet (5), each sheet having a peripheral edge (31, 41, 51), said pane (2) having an upper border (25), a lower border (26), a first lateral border (23) and a second lateral border (24), **characterized in that** said outer glass sheet (3) and said inner glass sheet (5) are each a glass sheet having undergone a thermal toughening or semi-toughening treatment and each having a thickness (e₃; es) such that the thickness (es) of said inner glass sheet (5) is less than or equal to the thickness (es) of said outer glass sheet (3), **and in that** the edge (51) of said inner glass sheet (5) is situated beyond the edge (41) of said sheet of adhesive material (4) and beyond the edge (31) of said outer glass sheet (3) only:
- over at least one portion of the length or even the whole length of said first lateral border (23) of said pane (2), and/or
- over at least one portion of the length or even the whole length of the second lateral border (24) of said pane (2).

2. The glazing unit (1) as claimed in claim 1, **characterized in that** the thickness (es) of said outer glass sheet (3) is between 1.60 mm and 3.85 mm.

3. The glazing unit (1) as claimed in either one of claims 1 and 2, **characterized in that** the thickness (es) of said inner glass sheet (5) is between 0.70 mm and 2.60 mm.

4. The glazing unit (1) as claimed in claim 3, **characterized in that** the thickness (es) of said inner glass sheet (5) is between 1.00 mm and 2.20 mm.

5. The glazing unit (1) as claimed in any one of claims 1 to 4, **characterized in that** said inner glass sheet (5) has surface stresses of at most 20 MPa, of 30 MPa and of 40 MPa, respectively, for a thickness of said inner glass sheet (5) of approximately 1.10 mm, of approximately 1.60 mm and of approximately 2.10 mm.

6. The glazing unit (1) as claimed in any one of claims 1 to 5, **characterized in that,** as seen in section across the thickness, the edge (51) of said inner glass sheet (5) is in the continuation of the edge (41) of said sheet of adhesive material (4) and of the edge (31) of said outer glass sheet (3) over the whole length of said upper border (25) of said pane (2).

7. The glazing unit (1) as claimed in any one of claims 1 to 6, **characterized in that,** as seen in section across the thickness, the edge (51) of said inner glass sheet (5) is in the continuation of the edge (31) of said outer glass sheet (3) over the whole length of said lower border (26) of said pane (2).

8. The glazing unit (1) as claimed in any one of claims 1 to 7, **characterized in that** the edge (51) of said inner glass sheet (5) extends beyond the edge (31) of said outer glass sheet (3) so as to form a centrifugal projection (9, 9') over at least one portion of the length or even the whole length of said lateral border (23) and/or over at least one portion of the length or even the whole length of said second lateral border (24), which is between 2.0 and 30.0 mm, or even between 3.0 and 20.0 mm, said projection (9, 9') preferably being constant over the length of said first lateral border (23) and/or of said second lateral border (24).

9. The glazing unit (1) as claimed in any one of claims 1 to 8, **characterized in that** said border (9, 9') is intended to be guided in a guiding and sealing element (71, 71') attached to said vehicle.

10. The glazing unit (1) as claimed in any one of claims 1 to 9, **characterized in that** said outer glass sheet (3) comprises an outer face (30), said outer face (30) being situated in the continuation of a peripherally adjacent body portion of said vehicle, such as a covering part (70, 70').
